# EUROPÄISCHE PATENTANMELDUNG

(11) **EP 4 170 978 A1**
(43) Veröffentlichungstag der Anmeldung: **26.04.2023**
(21) Anmeldenummer: 22170115.4
(22) Anmeldetag: 26.04.2022
(51) Int. Cl.: H04L 12/40, H04L 9/40, H04L 12/44

(54) **VERFAHREN ZUM ÜBERWACHEN EINES DATENVERKEHRS ZWISCHEN STEUERGERÄTEN EINES KRAFTFAHRZEUGS SOWIE ENTSPRECHEND AUSGESTATTETES KRAFTFAHRZEUG**

(30) Priorität: 22.10.2021 WO PCT/EP2021/079303
(71) Anmelder: Audi AG, 85045 Ingolstadt (DE); TTTech Auto AG, 1040 Wien (AT)
(72) Erfinder: STIRECIU, Alexandru, 031784 Bukarest (RO); PATRASCU, Costel, 062062 Bukarest (RO); SCHMIDT, Karsten, 85051 Ingolstadt (DE); STANGL, Bernhard, 1030 Wien (AT); MUNOZ CEPILLO, Jose Antonio, 08029 Barcelona (ES)
(74) Vertreter: Hofstetter, Schurack & Partner

(57) **Zusammenfassung**

Die Erfindung betrifft ein Verfahren zum Überwachen eines Datenverkehrs zwischen Steuergeräten (12, 13) eines Kraftfahrzeugs (10), wobei in einem Assoziativspeicher (22) zumindest ein Datenmuster (23) eines zu überwachenden und/oder zu detektierenden Pakettyps und/oder Dateninhalts gespeichert wird, sodass durch den Assoziativspeicher (22) in Reaktion auf Eingangsdaten (25), die das jeweilige Datenmuster (23) enthalten, ein zugeordnetes Treffersignal (27) erzeugt wird, und ein Netzwerkprozessor (21) aus empfangenen Datenpaketen (18) an vorbestimmten Überwachungspositionen Detektionsdaten (31) ausliest und daraus Eingangsdaten (25) für den Assoziativspeicher (22) bildet und durch Eingeben der Eingangsdaten (25) in den Assoziativspeicher (22) überprüft, ob sich ein Treffersignal (27) ergibt, und ein Mikroprozessor (29) anhand von Sendeplandaten (33), welche ein bestimmungsgemäßes Sendeschema der Steuergeräte (12, 13) beschreiben, mittels einer vorbestimmten Abgleichroutine (32) erkennt, ob die Treffersignale (27) von dem Sendeschema abweichen.

## Beschreibung

Die Erfindung betrifft ein Verfahren zum Überwachen eines Datenverkehrs zwischen Steuergeräten eines Kraftfahrzeugs sowie ein entsprechend ausgestattetes Kraftfahrzeug. Die Überwachung findet in einer Switchvorrichtung statt, die Datenpakete zwischen Netzwerkzweigen eines Datennetzes überträgt. Ohne dass es hierbei zu einer signifikanten Verzögerung oder Latenz bei der Weiterleitung kommt, sollen die Datenpakete oder zumindest einige davon daraufhin überprüft werden, ob es sich um vorbestimmten, unerwünschten Datenverkehr handelt, wie er beispielsweise Bestandteil eines Hackerangriffs oder durch ein manipuliertes oder defektes Steuergerät des Kraftfahrzeugs verursacht sein kann.

Denn in einem Kraftfahrzeug können solche Steuergeräte über ein Datennetzwerk oder Datennetz miteinander gekoppelt sein, um Datenpakete auszutauschen, wodurch beispielsweise eine mehrere Steuergeräte umfassende Fahrzeugfunktionalität realisiert werden kann. Ein Beispiel für ein solches Datennetz ist ein Ethernet-Netzwerk. Netzwerkzweige eines solchen Datennetzes können über eine Switchvorrichtung (eine Kurzbezeichnung ist auch "Switch" oder Datenweiche) verschaltet sein. Dazu kann jeder Netzwerkzweig an einem jeweiligen Port der Switchvorrichtung angeschlossen sein. Bei einem solche Port kann es sich um einen physikalischen Anschluss für ein Netzwerkkabel des Netzwerkzweigs sowie eine Schaltung zum Aussenden und Empfangen von Datenpaketen handeln. Trifft an einem solchen Port ein Datenpaket aus dem daran angeschlossenen Netzwerkzweig ein, so wird ermittelt, in welchen anderen Netzwerkzweig oder in welche mehreren anderen Netzwerkzweige das Datenpaket weitergeleitet werden muss. Das Datenpaket wird dann innerhalb der Switchvorrichtung an den entsprechenden Zielport mittels einer Schaltung weitergeleitet oder ausgesendet, die hier als Switchschaltung bezeichnet ist. Durch das derart geswitchte Weiterleiten von Datenpaketen können Netzwerkzweige voneinander logisch getrennt gehalten werden, wodurch sich auch eine Firewall-Funktionalität realisieren lässt.

Um zu ermitteln, wohin ein empfangenes Datenpaket weitergeleitet werden muss, also an welchem Zielport es innerhalb der Switchschaltung geleitet werden muss, kann ein so genannter Assoziativspeicher genutzt werden. Eine andere Bezeichnung für einen solchen Assoziativspeicher ist auch CAM-Filter (CAM - content addressable memory), wie beispielsweise der TCAM (ternary content addressable memory). Mittels eines Assoziativspeichers kann das so genannte Switching oder Routing in der besagten Switchschaltung eingestellt werden. Bei einem Assoziativspeicher lassen sich aber als Eingangsdaten nur eine begrenzte Anzahl von Bits oder Bytes aus dem jeweiligen empfangenen Datenpaket eingeben, um Zielportdaten zu erhalten, die den zumindest einen zu verwendenden Zielport beschreiben.

Bei einer Analyse des Datenverkehrs von Steuergeräten zur Detektion einer Manipulation in einem der Steuergeräte und/oder zur Detektion eines zusätzlich an das Datennetz angeschlossenen, nicht-autorisierten Geräts kann eine aufwändige Analyse der im Netzwerk übertragenen Datenpakete notwendig sein. Dies darf aber nicht dazu führen, dass es zu einer zusätzlichen Latenz oder Wartezeit bei der Übertragung der Datenpakete kommt, weil ansonsten die entsprechende, von dem Datenpaket abhängigen Funktionalität im Kraftfahrzeug beeinträchtigt werden kann, beispielsweise das Steuern einer Rückfahrkamera. Andererseits ist das Auskoppeln oder Kopieren von Datenpaketen für eine detaillierte Analyse mit einem derart großen Datenvolumen verbunden, dass sich die hierfür benötigte Rechenkapazität in einem Kraftfahrzeug nicht mit vertretbarem Kostenaufwand bereitstellen lässt.

Aus der US 8 582 428 B1 ist bekannt, dass in einem Router mittels eines Assoziativspeichers, TCAM, Datenpakete eines bestimmten Pakettyps mittels Zählern gezählt werden können. Die Datenpakete können zusätzlich mit einem Zeitstempel versehen werden, um eine Analyse des Datenverkehrs durchzuführen.

Zeitstempel werden auch verwendet, um ein Alter einer Kommunikationsverbindung zu messen.

Aus der WO 2019 / 116973 A1 ist bekannt, dass in einem Kraftfahrzeug nichtautorisierter Datenverkehr daran erkannt wird, dass ein Steuergerät pro Sekunde mehr Daten erzeugt, als ursprünglich vorgesehen ist. Eine Manipulation eines Steuergeräts, die lediglich wenige Datenpakete zum Erzeugen eines Schadens im Kraftfahrzeug führt, kann damit nicht erkannt werden.

Aus der WO 2006 / 069041 A2 und der US 2007 / 022474 A1 ist bekannt, dass bei einer Firewall Datenpakete immer dann gelöscht werden, wenn die Anzahl von Datenpaketen eines bestimmten Typs von einem bestimmten Absender pro gegebener Zeiteinheit über einem Schwellenwert liegt. Mit diesem Ansatz kann nur eine so genannte Denial-of-sevice-Attacke blockiert werden, die auf der massenhaften Erzeugung von Datenpaketen beruht.

Aus der US 2020 / 304532 A1 ist bekannt, mittels eines TCAM-Assoziativspeichers Datenverkehr in einem Kraftfahrzeug zu analysieren, um ein ungewöhnlich hohes Datenaufkommen aus einem Gerät zu detektieren. Damit ein Mikroprozessor beim Analysieren ungewöhnlicher Datenpakete nicht überlastet wird, werden alle Datenpakete mittels einer ersten Regel vorgefiltert und lediglich solche Datenpakete, die gemäß der ersten Regel ungewöhnlich sind, werden dem Mikroprozessor zum Anwenden der zweiten Regel weitergeleitet.

Aus der US 2017 / 118 041 A1 ist ein Firewall-Rechner bekannt, der mittels mehrerer verteilter TCAM-Assoziativspeicher Datenpakete filtert und dabei bestimmte Datenpakete an eine CPU weitergibt. Im Zusammenhang mit den Firewall-Regeln, ACL, kann in dem Firewall-Rechner gezählt werden, welche Regel wie oft angewendet wurde.

Der Erfindung liegt die Aufgabe zugrunde, in einem Kraftfahrzeug einen unplanmäßigen Datenverkehr eines Steuergeräts oder eines zusätzlich angeschlossenen Geräts zu erkennen.

Die Aufgabe wird durch die Gegenstände der unabhängigen Patenansprüche gelöst. Vorteilhafte Ausführungsformen der Erfindung sind durch die abhängigen Patentansprüche, die folgende Beschreibung sowie die Fig. beschrieben.

Durch die Erfindung ist hierzu ein Verfahren beschrieben, um einen Datenverkehr zwischen Steuergeräten eines Kraftfahrzeugs zu überwachen. Das Verfahren geht davon aus, dass die Steuergeräte über ein Datennetz verbunden sind, in welchem eine Switchvorrichtung physikalische Ports zum Empfangen und zum Aussenden von Datenpaketen über eine interne Switchschaltung oder Datenweiche verschaltet. Bei dem Verfahren ist vorgesehen, dass zu einem jeweiligen Datenpaket, das über einen der Ports empfangen wurde, z.B. durch einen Netzwerkprozessor mittels eines Assoziativspeichers aus ersten Eingangsdaten (aus dem Datenpaket) Zielportdaten (erste Ausgabedaten) ermittelt werden und in Abhängigkeit von den ermittelten Zielportdaten aus den (insgesamt vorhandenen) Ports zumindest ein Port als Zielport ausgewählt wird und durch die Switchschaltung das empfangene Datenpaket oder zumindest ein Teil davon an den zumindest einen Zielport geleitet wird.

Die Switchvorrichtung weist also in an sich bekannter Weise intern die Switchschaltung zum wahlweisen Übertragen eines empfangenen Datenpakets von einem Port zu zumindest einem Zielport auf, um so das Datenpaket zwischen Netzwerkzweigen zu übertragen (zu switchen oder zu routen). Jeder Port kann hierzu eine Transceiverschaltung aufweisen, um ein Datenpaket zu empfangen und/oder zu senden. Der hier genannte Assoziativspeicher kann als CAM (content addressable memory),insbesondere als TCAM (ternary content addressable memory) implementiert oder bereitgestellt sein. Die Zielportdaten ergeben sich in an sich bekannter Weise aus den jeweils an den Port angeschlossenen Steuergerät oder Geräten.

Zur Lösung der Aufgabe ist vorgesehen, dass in dem Assoziativspeicher zumindest ein Datenmuster eines zu überwachenden und/oder zu detektierenden Pakettyps und/oder Dateninhalts gespeichert wird, sodass der Assoziativspeicher in Reaktion auf solche Eingangsdaten, die das jeweilige Datenmuster enthalten, zugeordnete Trefferdaten erzeugt. Der Netzwerkprozessor liest aus dem jeweiligen empfangenen Datenpaket entsprechend nicht nur Daten zum Ermitteln des zumindest einen Zielports aus, sondern er liest an vorbestimmten Überwachungspositionen des Datenpaktes (also an vorgegebenen Bitpositionen oder Bytepositionen) Detektionsdaten aus und fasst diese zu weiteren, zweiten Eingangsdaten für den Assoziativspeicher zusammen und überprüft dann durch Eingeben dieser Eingangsdaten in den Assoziativspeicher, ob sich Trefferdaten ergeben. Der Assoziativspeicher wird somit auch dazu genutzt, Datenpakete eines vorgegebenen Pakettyps und/oder mit einem vorgegebenen Dateninhalt zu detektieren. Hierbei wird durch Vorgeben der besagten Überwachungspositionen (also Bitpositionen oder Bytepositionen) festgelegt, wo in dem Datenpaket, also an welcher Stelle, Bits oder Bytes aus dem Datenpaket als Detektionsdaten ausgelesen werden sollen, aus denen Eingangsdaten für den Assoziativspeicher gebildet werden. Diese Eingangsdaten für den Assoziativspeicher dienen dann nicht dazu, einen Zielport zu finden, sondern sie sollen Trefferdaten mittels des Assoziativspeichers erzeugen, was indiziert, dass das zugehörige Datenmuster erkannt wurde. Sie sind hier auch als Überwachungsdaten bezeichnet. Die Trefferdaten können beispielsweise signalisieren, dass das entsprechende Datenmuster und/oder welches Datenmuster durch den Assoziativspeicher in den Eingangsdaten erkannt wurde.

Bereitgestellt wird somit ein Verfahren zum Überwachen eines Datenverkehrs zwischen Steuergeräten eines Kraftfahrzeugs, wobei in einem Assoziativspeicher (z.B. TCAM) zumindest ein Datenmuster eines zu überwachenden und/oder zu detektierenden Pakettyps und/oder Dateninhalts gespeichert wird, sodass durch den Assoziativspeicher in Reaktion auf Eingangsdaten, die das jeweilige Datenmuster enthalten, zugeordnete Trefferdaten erzeugt werden, und entsprechend z.B. ein Netzwerkprozessor aus empfangenen Datenpaketen an vorbestimmten Überwachungspositionen Detektionsdaten ausliest und daraus Eingangsdaten (zweite Eingangsdaten) für den Assoziativspeicher bildet und durch Eingeben der Eingangsdaten in den Assoziativspeicher überprüft, ob sich Trefferdaten (zweite Ausgabedaten) ergeben, und ein Mikroprozessor anhand von Sendeplandaten, welche ein bestimmungsgemäßes Sendeschema der Steuergeräte beschreiben, mittels einer vorbestimmten Abgleichroutine erkennt, ob die Trefferdaten von dem Sendeschema abweichen. Dann kann eine Abwehrroutine gestartet werden.

Ein Datenmuster, wie es im Assoziativspeicher für einen Vergleich mit den jeweiligen Eingabedaten gespeichert sein kann, kann für beide Verwendungszwecke (Zielport und Trefferdaten) ein Bitmuster oder Bytemuster sein. Ausgabedaten des Assoziativspeichers können für beide Verwendungszwecke jeweils eine Bitfolge oder Bytefolge sein. Es können Füllbits vorgesehen sein, wenn eine Speicherzelle größer ist als benötigt.

Es ist zumindest ein Zähler bereitgestellt, durch dessen jeweiligen Zählerwert angegeben wird, wie oft zu zumindest einem vorbestimmten Datenmuster Trefferdaten erzeugt wurden. Der jeweilige Zählerwert und das jeweils letzte Datenpaket, durch welches der Zählerwert zuletzt erhöht wurde, werden als Analysedaten in einem Auslesespeicher bereitgestellt und ein Mikroprozessor liest über eine Datenschnittstelle diese aktuellen Analysedaten aus. Somit wird hier ermöglicht, zu zählen, wie oft zumindest ein vorbestimmtes Datenmuster erkannt oder detektiert wurde, das sich Überwachungsdaten bestimmter Überwachungspositionen eines Datenpakets ergibt. Ein Zähler kann auch für mehrere unterschiedliche Trefferdaten, also für mehrere unterschiedliche Datenmuster, verwendet werden, indem ein einzelner Zähler mit mehreren Einträgen des Assoziativspeichers gekoppelt wird. In den Analysedaten liegt die Information vor, welches Datenpaket zuletzt den Zählerwert erhöht hat, wobei zusätzlich auch der Zählerwert mit in den Analysedaten im Auslesespeicher gespeichert wird. Dies kann dann aktiv von einem Mikroprozessor bei Bedarf ausgelesen werden. Die Analysedaten im Auslesespeicher können also mit jeder Zähleränderung aktualisiert werden. Es kann getrennter Speicherplatz für jeden Zähler vorgesehen sein oder es kann ein gemeinsamer Speicherplatz für die Analysedaten mehrerer oder aller Zähler vorgesehen sein.

In einem Kraftfahrzeug liegt nun die Besonderheit vor, dass zumindest ein Teil des Datenverkehrs durch Steuergeräte erzeugt wird, die einem fest programmierten Sendeschema folgen. Lediglich ein vorbekannter Anteil des Datenverkehrs ist dynamisch, beispielsweise Datenverkehr von einem Steuergerät für Unterhaltungselektronik. Der Anteil kann aber auch Null betragen. Anhand von Sendeplandaten, welche das bestimmungsgemäßes Sendeschema der Steuergeräte beschreiben, erkennt nun der Mikroprozessor mittels einer vorbestimmten Abgleichroutine, wenn die Analysedaten von dem Sendeschema abweichen, und er löst in diesem Fall eine vorbestimmte Abwehrroutine aus.

Der Erfindung liegt hier also die Erkenntnis zugrunde, dass sich bei einem unmanipulierten Kraftfahrzeug, wenn also keines der Steuergeräte von seinem Sendeschema abweicht und auch kein zusätzliches Gerät an das Datennetz angeschlossen ist und zusätzlichen Datenverkehr erzeugt, sich dann auch nur solche Analysedaten ergeben dürfen, die gemäß der Abgleichroutine dem Sendeschema entsprechen, wie es durch die Sendeplandaten beschrieben ist, die z.B. der Hersteller des Kraftfahrzeugs angeben kann. Die Abgleichroutine kann eine exakte Übereinstimmung mit diesen Sendeplandaten fordern oder es kann eine Toleranz für die Zählerwerte und/oder Dateninhalte der finalen Analysedaten zugelassen sein. Das beschriebene Verfahren kann insbesondere auf Ethernet-Datenpakete angewendet werden. Ein Ethernet als Datennetz beruht auf paketorientiertem Datenverkehr, sodass (anders als bei einem Zeitschlitzorientierten Datennetz) Sendezeitpunkte und/oder Datenmengen im Datenverkehr variieren können, da keine reservierten Zeitschlitze vorgesehen sind. Durch den Zählerwert kann erkannt werden, ob für ein bestimmtes Datenmuster die Anzahl der Datenpakete einen Schwellenwert überschreitet, unabhängig von exakten Sendezeitpunkt. Da zusätzlich in den finalen Analysedaten auch das zugehörige Datenpaket, welches die Überschreibung des Schwellenwerts ausgelöst hat, mit enthalten ist, kann ein Rückschluss auf den Sender gezogen werden, also ein manipuliertes oder defektes Steuergerät erkannt werden, oder es kann erkannt werden, dass eine Absenderadresse verwendet wird, die zu keinem lieferseitigen Steuergerät des Kraftfahrzeugs gehört, sondern zu einem zusätzlich an das Datennetz angeschlossenen Gerät. Als Abwehrroutine oder Abwehrmaßnahme kann beispielsweise eine Einschränkung der Funktionalität im Kraftfahrzeug erfolgen, z.B. eine Verringerung eines Funktionsumfangs oder ein Abschalten der Funktionalität, wie z.B. einer Medienwiedergabe und/oder einer Telefoniefunktion und/oder einer Internet-Verbindung. Je nach TCAM-Eintrag oder Datenmuster, für welches erkannt wird, dass eine Abweichung von dem Sendeschema erfolgt ist, kann eine andere Funktionalität des Kraftfahrzeugs eingeschränkt oder abgestellt werden.

Der jeweilige Zähler (Counter) und/oder der Assoziativspeicher (TCAM) kann jeweils ein Teil des Netzwerkprozessors sein oder der jeweilige Zähler und/oder der Assoziativspeicher kann außerhalb des Netzwerkprozessors bereitgestellt sein.

Die Idee ist hier also, einen zusätzlichen Counter und Timestamps einzuführen, die ein Ansprechen des TCAM auswerten.

Die Erfindung umfasst auch Ausführungsformen, durch die sich zusätzliche Vorteile ergeben.

Eine Ausführungsform umfasst, dass für jeden Zähler zusätzlich zu dem Zählerwert auch ein Zeitstempel der jeweils letzten Erhöhung des Zählerwerts gespeichert gehalten und als Teil der Analysedaten in dem Auslesespeicher bereitgestellt wird. Die Analysedaten im Auslesespeicher enthalten also den Zählerwert, dessen Zeitstempel und das zugehörige, zuletzt empfangene Datenpaket. Der hier verwendete Zählerwert signalisiert also, wann das in den Analysedaten enthaltene Datenpaket eingetroffen ist und das Trefferdaten ausgelöst hat. Es hat sich herausgestellt, dass dies in Zusammenhang mit Sendeschemata von Steuergeräten eine besonders sensitive Fehler- und Manipulationserkennung ermöglicht. So kann zusätzlich der Mikroprozessor, der die Analysedaten mittels der Abgleichroutine untersucht, auch ein jeweiliges Aktivitätssignal zumindest einer Fahrzeugkomponente und/oder eines Steuergeräts empfangen und dann anhand des Zeitstempels überprüfen, ob das Datenpaket aufgrund dieser signalisierten Aktivität der Fahrzeugkomponente und/oder des Steuergeräts gesendet wurde und somit zwar als außerhalb des Sendeschemas liegend, aber durch diese Aktivität ausgelöstes Datenpaket anerkannt wird und damit doch als zulässig klassifiziert wird, sodass die Abwehrroutine nicht ausgelöst werden muss. Das Aktivitätssignal kann z.B. über eine CAN-Bus empfangen werden. Wichtig kann hierbei insbesondere sein, dass der Mikroprozessor hierdurch nicht überlastet werden kann, da bevorzugt im Mikroprozessor selbst entschieden werden kann, ob das Datenpaket tatsächlich aus dem Auslesespeicher / an der Datenschnittstelle abgeholt wird oder ob es vom nächsten Datenpaket überschrieben werden soll, weil der Mikroprozessor im Moment keine Ressourcen für die Echtzeit-Bearbeitung frei hat. Im Mikroprozessor bleibt hierbei die Übersicht erhalten, da zu jedem Datenpaket dessen Ordnungsnummer (Zähler) und/oder der Zeitstempel verfügbar sind. Der Anmeldegegenstand stellt somit für einen Mikroprozessor ein Überwachungswerkzeug bereit, das eine Überlastung des Mikroprozessors verhindern kann und dennoch einen detaillierten Einblick in "verdächtige" oder mittels Assoziativspeichers ausgewählte Datenpakete liefert (das Datenpaket selbst wird ebenfalls an der Datenschnittstelle bereitgestellt). Bevorzugt ist also vorgesehen, die besagten Datenpakete lediglich an einer Datenschnittstelle bereitzustellen, damit der Mikroprozessor immer selbst entscheiden kann, ob er ein Datenpaket abholt, wenn entsprechende Rechenkapazität bereitsteht. Wenn der Mikroprozessor dann ein Datenpaket an der Datenschnittstelle entgegennimmt, wird ihm durch den Zählerwert und den Zeitstempel signalisiert, welches Datenpaket vorliegt und/oder wie alt das Datenpaket ist.

Eine Ausführungsform umfasst, dass zumindest ein Zähler jeweils die Trefferdaten für zumindest zwei Datenmuster zählt. Das heißt, es werden bei zumindest einem Zähler jeweils die Trefferdaten für zumindest zwei unterschiedliche Datenmuster zusammengefasst. Der Zähler wird also immer dann inkrementiert, wenn irgendeines der beiden Datenmuster durch den Assoziativspeicher erkannt wird. Hierdurch ergibt sich der Vorteil, dass auch eine solche Manipulation erkannt werden kann, bei welcher versucht wird, manipulierten Datenverkehr auf mehrere unterschiedliche Pakettypen aufzuteilen, beispielsweise durch Verwendung zweier unterschiedlicher Absenderadressen und/oder MAC-Adressen (MAC - medium access control).

Eine Ausführungsform umfasst, dass durch den Netzwerkprozessor und/oder den Mikroprozessor der jeweilige Zählerwert des zumindest einen Zählers zurückgesetzt wird, falls eine vorbestimmte Rücksetzbedingung erfüllt ist. Mit anderen Worten wird nicht die absolute Anzahl aller Datenpakete eines bestimmten Datenmusters seit Anbeginn des Betriebs des Kraftfahrzeugs gezählt, sondern es können Zählintervalle festgelegt werden. Ein mögliches Zählintervall ist eine Zeiteinheit, das heißt die Rücksetzbedingung kann vorsehen, dass nach Ablauf einer vorbestimmte Zeitdauer, beispielsweise nach einer Sekunde oder nach zehn Sekunden oder einer Minute, der jeweilige Zähler zurückgesetzt wird. Es kann für jedes Datenmuster eine eigene Rücksetzbedingung vorgesehen werden. Eine andere Rücksetzbedingung kann sein, dass in Abhängigkeit von einem Signal, dass einen Schaltvorgang oder eine Aktivität in einer Komponente des Kraftfahrzeugs, beispielsweise in einer Rückfahrkamera oder in einem Medienabspielgeräts, ein Zähler für ein solches Datenmuster, das dieser Komponente zugeordnet ist, zurückgesetzt wird.

Eine Ausführungsform umfasst, dass mehrere Positionsdatensätze für unterschiedliche Überwachungspositionen bereitgestellt werden (also Datensätze mit jeweiligen Angaben zu Bitpositionen und/oder Bytepositionen) und durch den Netzwerkprozessor anhand des Datenpakets (Headerdaten und/oder Nutzdaten) eine Paketcharakteristik der jeweiligen Datenpakets ermittelt wird, und in Abhängigkeit von der Paketcharakteristik einer aus den Positionsdatensätzen ausgewählt wird, sodass sich wechselnde Überwachungspositionen ergeben, und die Detektionsdaten an den durch den ausgewählten Positionsdatensatz angegebenen Überwachungspositionen ausgelesen werden. Mit anderen Worten kann für unterschiedliche Paketcharakteristiken festgelegt werden, welche Bits oder Bytes, also an welchen Positionen innerhalb des Datenpakets (Überwachungspositionen) der Dateninhalt für die Detektionsdaten ausgelesen wird, um daraus die Eingangsdaten für den Assoziativspeicher zu bilden. Hierdurch ergibt sich der Vorteil, dass in Abhängigkeit von der Paketcharakteristik unterschiedliche Überwachungspositionen untersucht werden können. Welche Paketcharakteristik ein Datenpaket aufweist, kann beispielsweise an dessen Headerdaten und/oder Nutzdaten erkannt werden. In diesem Zusammenhang ist folgende Ausführungsform vorteilhaft.

Die Ausführungsform umfasst, dass die Paketcharakteristik ein Protokolltyp (TCP oder UDP) und/oder Pakettypen (Erstpaket einer Kommunikation, Folgepaket) und/oder Dateninhalte (Senderadresse, Empfängeradresse) angibt. Als Protokolltyp kann beispielsweise zwischen TCP (transport control protocol) und UDP (user datagram protocol) unterschieden werden, um nur beispielhaft zwei mögliche Protokolle für den Datenverkehr in einem Kraftfahrzeug zu nennen. Als Pakettyp kann beispielsweise unterschieden werden, ob es sich um ein Erstpaket einer Kommunikation handelt oder ein Folgepaket der Kommunikation. Beispielsweise kann hier das so genannte SYN-Flag ausgewertet werden. Es kann auch ein Dateninhalt in Form beispielsweise der Senderadresse und/oder Empfängeradresse zum Bilden der Eingangsdaten für den Assoziativspeicher in vorteilhafter Weise genutzt werden. Hieran kann beispielsweise eine nichtregistrierte Senderadresse detektiert werden.

Eine Ausführungsform umfasst, dass die Überwachungspositionen unzusammenhängende Datenfelder des Datenpakets beschreiben, also solche Datenbereiche, zwischen denen sich jeweils mindestens ein Bit oder mindestens ein Byte befindet, das von den Detektionsdaten ausgeschlossen ist, also nicht zu den Detektionsdaten gehört. Das Auslesen der Detektionsdaten zum Bilden der Eingangsdaten für den Assoziativspeicher muss also keine fortlaufende Sequenz von Bits oder Bytes aus dem Datenpaket umfassen, sondern es können durch Festlegen von disjunkten Datenfeldern auch solche Bits oder Bytes ausgelesen werden, zwischen denen sich weitere Bits oder Bytes befinden, die nicht Teil der Detektionsdaten werden. Hierdurch ist man in der Analyse der Datenpakete flexibler. Durch Bereitstellen einer Logik, die auf einzelne und/oder voneinander unabhängige Überwachungspositionen in dem Datenpaket zugreift, können Eingabedaten für den Assoziativspeicher ermittelt oder zusammengesucht oder kombiniert werden, die aussagekräftiger sein können als ein einzelner zusammenhängender Abschnitt des Datenpakets, wie dies im Stand der Technik lediglich verfügbar ist. Die Überwachungspositionen können z.B. als Bit- und/oder Bytenummern (z.B. Byte 1, 4, 7 und 9) und/oder als Bereichsangaben (z.B. Bits 1-3 und 18-64 und 72-124) definiert sein.

Eine Ausführungsform umfasst, dass das Bilden der Eingangsdaten aus den Detektionsdaten des Datenpaket umfasst, dass die Detektionsdaten mittels einer Shift-Operation umgeordnet werden und/oder mittels zumindest einer Kombinationsregel kombiniert werden. Hierdurch kann eine Vorverarbeitung stattfinden, indem eine Shift-Operation und/oder eine Kombinationsregel angewendet wird. Eine Kombinationsregel kann beispielsweise eine logische Operation, wie beispielsweise AND (Logisch-UND) oder OR (Logisch-ODER), umfassen. Somit lassen sich Bits oder Bytes der Detektionsdaten zusammenfassen oder komprimieren, um beispielsweise ein vorgegebenes Format zu erhalten. Zudem kann durch eine Shift-Operation und/oder eine Kombinationsregel auch bereits ein erster Schritt einer Detektion von unerwünschten Datenverkehr im Datennetzes durchgeführt werden. So kann beispielsweise überprüft werden, ob zwei vorbestimmte Bits in den Detektionsdaten eine vorbestimmte logische Kombination (z.B. beide gesetzt oder beide gelöscht) aufweisen. Dies kann dann durch ein einzelnes Bit repräsentiert werden, das Bestandteil der Eingangsdaten anstelle der ursprünglichen Bits werden kann.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung stellt auch eine Überwachungsvorrichtung oder Switchvorrichtung für ein Datennetz eines Kraftfahrzeugs bereit, wobei die Switchvorrichtung einen Netzwerkprozessor und einen Assoziativspeicher und einer Recheneinheit aufweist, die dazu eingerichtet sind, eine Ausführungsform des erfindungsgemäßen Verfahrens durchzuführen. Der Assoziativspeicher kann in der beschriebenen Weise ein CAM, insbesondere ein TCAM, sein. Der Assoziativspeicher kann in dem Netzwerkprozessor integriert oder in einem separaten Speicherelement vorgesehen sein. Als Netzwerkprozessor kann der für Switchvorrichtungen bekannte Netzwerkprozessortyp vorgesehen werden, der um die beschriebenen Verfahrensschritte erweitert werden kann. Als Recheneinheit für die beschriebene Verarbeitung der Analysedaten kann eine so genannte CPU (central processing unit) oder einen Mikrocontroller vorgesehen sein oder allgemein ein Mikroprozessor, wobei die Recheneinheit mit dem Netzwerkprozessor und/oder dem Assoziativspeicher über eine jeweilige Datenschnittstelle gekoppelt sein kann. Der Netzwerkprozessor und die Recheneinheit können jeweils eine Datenverarbeitungsvorrichtung oder eine Prozessoreinrichtung sein, die jeweils zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Die Recheneinheit kann frei-programmierbar ausgestaltet sein. Des Weiteren kann Programmcode bereitgestellt sein, der dazu eingerichtet ist, bei Ausführen Verfahrensschritte einer Ausführungsform des erfindungsgemäßen Verfahrens durchzuführen. Der Programmcode kann in zumindest einem Datenspeicher gespeichert sein, mit welchem die Recheneinheit und/oder der Netzwerkprozessor gekoppelt sein kann. Der Netzwerkprozessor kann alternativ als reine Hardware-Logik ohne einen gespeicherten Programmcode realisiert sein. Beispielsweise kann es sich um einen ASIC (application specific integrated circuit) handeln.

Die Datenschnittstelle kann z.B. einer der Ports sein, über welchen der besagte Mikroprozessor für das IDS mit der Switchschaltung verbunden ist, d.h. verdächtige oder detektierte Datenpakte können über diesen Port an den Mikroprozessor zur weiteren Analyse weitergeleitet werden. Ein Datenpakte kann somit an zwei Ports oder Ausgängen ausgegeben werden, d.h. den ermittelten Zielport und die z.B. als Port ausgestaltete Datenschnittstelle. Die Datenschnittstelle kann alternativ dazu von den Port verschieden sein, z.B. eine Busverbindung.

Die Erfindung stellt auch ein Kraftfahrzeug mit einem Datennetz bereit, bei welchem mehrere Netzwerkzweige über eine Ausführungsform der erfindungsgemäßen Überwachungsvorrichtung verschaltet sind. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Ausführungsform des erfindungsgemäßen Kraftfahrzeugs;
- Fig. 2: eine Skizze zur Veranschaulichung eines TCAM, der Trefferdaten an Zähler aussendet; und
- Fig. 3: eine schematische Darstellung eines Auslesespeichers, über welchen der TCAM mit einem Mikroprozessor gekoppelt sein kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

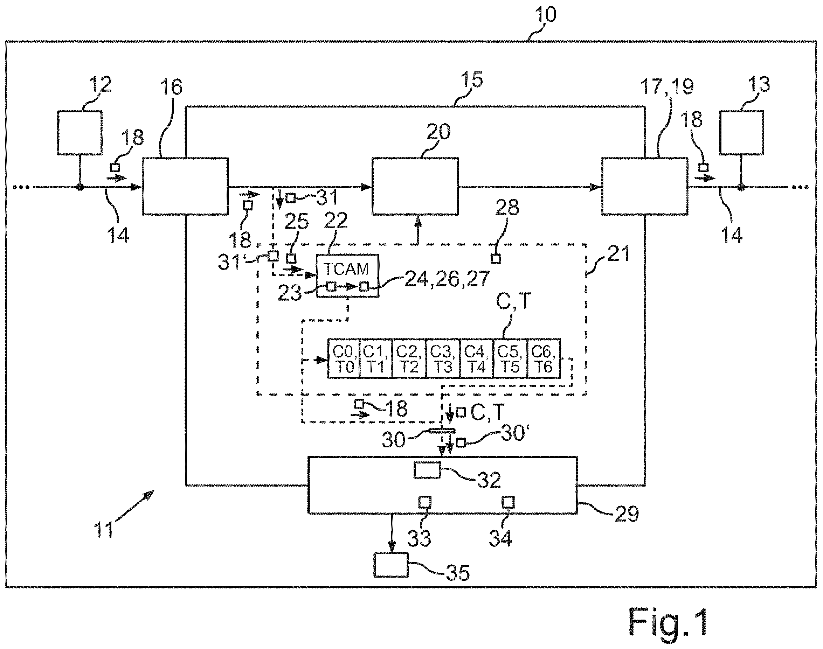

Fig. 1 zeigt ein Kraftfahrzeug 10, bei dem es sich um einen Kraftwagen, beispielsweise einen Personenkraftwagen oder Lastkraftwagen, handeln kann. In dem Kraftfahrzeug 10 kann ein Datennetz 11 bereitgestellt sein, das beispielsweise ein Ethernet-Netzwerk sein kann. Über das Datennetz 11 können Steuergeräte 12, 13 für eine Datenkommunikation oder einen Datenaustausch miteinander gekoppelt sein. Um mehrere Netzwerkzweige 14 des Datennetzes 11 miteinander zu verschalten, kann eine Switchvorrichtung 15 bereitgestellt sein. Ein jeweiliges Netzwerkkabel jedes Netzwerkzweigs 14 kann dabei an einen jeweiligen Port 16, 17 der Switchvorrichtung 15 in an sich bekannter Weise angeschlossen sein. Die Fig. 1 zeigt beispielhaft, wie das Steuergerät 12 ein Datenpaket 18 an das Steuergerät 13 senden kann. Hierbei kann die Switchvorrichtung 15 das Datenpaket 18 am Port 16, an welchen der Netzwerkzweige 14 des Steuergeräts 12 angeschlossen ist, empfangen, und aus den mehreren Ports der Switchvorrichtung 15 (nicht dargestellt sind noch mögliche weitere Ports) denjenigen Port 17 auswählen, an welchen der Netzwerkzweig 14 des Steuergeräts 13 angeschlossen ist, sodass in diesem Netzwerkzweig 14 und insbesondere nur in diesem Netzwerkzweig 14, das Datenpaket 18 weitergeleitet werden kann. Das Datenpaket 18 kann allgemein durch die Switchvorrichtung 15 insbesondere ausschließlich an diejenigen Netzwerkzweige oder denjenigen Netzwerkzweig weitergeleitet werden, in welchem sich ein Steuergerät 13 befindet, an welches das Datenpaket 18 in an sich bekannter Weise adressiert ist, beispielsweise über eine so genannte IP-Adresse und/oder MAC-Adresse.

Um in der Switchvorrichtung 15 das empfangene Datenpaket 18 an den korrekten Port 17, also einen Zielport 19, weiterzuleiten, kann in der Switchvorrichtung 15 eine Switchschaltung 20 (auch bezeichnet als Switch-Engine) vorgesehen sein, die in an sich bekannter Weise ausgestaltet sein kann. Die Switchschaltung 20 kann durch einen Netzwerkprozessor 21 gesteuert werden. Zum Ermitteln, welcher Zielport 19 für das empfangene Datenpaket 18 in der Switchschaltung 20 eingestellt werden soll, kann ein Assoziativspeicher 22 vorgesehen sein, insbesondere ein TCAM. In dem Assoziativspeicher 22 können einem jeweiligen möglichen Datenmuster 23 Ausgabedaten 24 zugeordnet sein. Aus dem Datenpaket 18 können beispielsweise durch den Netzwerkprozessor 21 an vorgegebenen Auswahlpositionen des empfangenen Datenpakets 18 die Daten oder deren Dateninhalt ausgelesen werden und zu Eingangsdaten 25 zusammengefasst werden, die dem Assoziativspeicher 22 übergeben werden können. Enthalten die Eingangsdaten 25 eines der Datenmuster 23, so kann der Assoziativspeicher 22 die entsprechenden Ausgabedaten 24 als Zielportdaten 26 ausgeben. Anhand der Zielportdaten 26 kann beispielsweise der Netzwerkprozessor 21 den entsprechenden Zielport 19 in der Switchschaltung 20 einstellen oder auswählen.

Der Assoziativspeicher kann in dem Netzwerkprozessor integriert sein oder von diesem verschieden sein. Die Formulierung, dass "durch den Netzwerkprozessor mittels des Assoziativspeichers Zielportdaten zugeordnet werden" bedeutet also, dass die Logik des Netzwerkprozessors auf den Assoziativspeichers zugreift oder diesen nutzt, wozu der Assoziativspeicher in den Netzwerkprozessor integriert sein kann oder außerhalb von diesem angeordnet und mit diesem verschaltet sein kann. Es kann vorgesehen sein, dass der Assoziativspeicher 22 mit der Switchschaltung 20 verbunden ist, sodass die Zielportdaten 26 direkt, das heißt ohne den Netzwerkprozessor 21, von der Switchschaltung 20 zum Auswählen des Zielports 19 ausgewertet werden können.

In dem Kraftfahrzeug 10 kann mittels der Switchvorrichtung 15 auch ein IDS (Intrusion-Detection-System gegen Softwarefehler und/oder Schadsoftware) realisiert sein, das heißt es kann erkannt werden, ob in dem Datennetz 11 eines der Steuergeräte 12, 13 (dargestellt sind hier beispielhaft nur zwei Steuergeräte) manipuliert ist oder von einem Datenvirus befallen ist und/oder ob ein nichtautorisiertes Gerät an dem Datennetz 11 angeschlossen ist und zumindest ein Datenpaket über die Switchvorrichtung 15 sendet.

Hierzu kann in der Switchvorrichtung 15 ebenfalls der Assoziativspeicher 22 genutzt werden, ohne dass dieser eine zusätzliche Funktionalität aufweisen muss.

Der Netzwerkprozessor 21 kann hierfür zumindest einen Positionsdatensatz 28 bereithalten, in welchem jeweils Überwachungspositionen angegeben sein können, die Bits oder zumindest ein Byte in dem empfangenen Datenpaket 18 Bitpositionen oder Bytepositionen angegeben können, an welchen die Daten oder der Dateninhalt des empfangenen Datenpakets 18 ausgelesen werden soll. Dies ergibt die ausgelesenen Detektionsdaten 31. Diese Detektionsdaten 31 können genutzt werden, um Eingangsdaten 25 für die Überwachung des Datennetzes 11 zu erzeugen. Zuvor kann zumindest eine Operation 31' auf die Detektionsdaten 31 angewendet werden, um Eingangsdaten 25 für den Assoziativspeicher 22 zu bilden, aber es können auch die Detektionsdaten 31 unmittelbar als Eingangsdaten 25 bereitgestellt werden. Die Eingangsdaten 25 können in den Assoziativspeicher 22 eingespeist werden, um auf zumindest ein Datenmuster 23 hin überprüft zu werden. Trifft eines der Datenmuster 23 zu, so werden entsprechende Ausgabedaten 24 durch den Assoziativspeicher 22 ausgegeben. Bei diesen Ausgabedaten 24 handelt es sich dann aber um die Trefferdaten 27, die jeweils einem entsprechenden Datenmuster 23 zugeordnet sein können und die ein Treffersignal 27' zum Signalisieren eines Treffers (Übereinstimmung mit einem Datenmuster für IDS).

Wann immer Eingangsdaten 25 für die Überwachung des Datennetzes ein solches Treffersignal 27' in dem Assoziativspeicher 22 auslösen, kann ein jeweiliges Tupel CT aus einem Zähler C und einem Zeitstempel T aktualisiert werden. Für ein jeweiliges Treffersignal oder eine Kombination daraus kann jeweils ein Tupel CT bereitgestellt werden, was in der Fig. 1 beispielhaft sieben Zähler C0 bis C6 und zugehörigen Speichern für Zeitstempel T0 bis T6 veranschaulicht ist, wobei die Anzahl hier beispielhaft gewählt ist. Durch einen Mikroprozessor 29 kann für die einzelnen Tupel CT, also die jeweilige Kombination aus Zähler C und Zeitstempel T aus einem Auslesespeicher 30 der jeweilige Wert des Zählers C und des Zeitstempels T sowie zumindest ein ebenfalls in dem Auslesespeicher 30 gespeicherter Teil desjenigen Datenpakets 18 ausgelesen werden, der zur letzten Inkrementierung des Zählers C zum Zeitstempel oder Zeitpunkt des Zeitstempels T für das Auslösesignal oder Treffersignal gesorgt hat oder dieses verursacht hat. Hierzu kann das jeweils letzte Datenpaket 18 des entsprechenden Tupel CT in dem Auslesespeicher 30 mit abgespeichert werden.

Durch den Mikroprozessor 29 kann dann mittels einer Abgleichroutine 32 überprüft werden, ob eine Anzahl an Treffern, wie sie in dem jeweiligen Zähler C0 bis C6 für das jeweilige Datenmuster 23 gespeichert ist und für den zugehörigen Zeitstempel T0 bis T6 entsprechende Sendeplandaten 33, die den bestimmungsgemäßen oder für die Steuergeräte 12, 13 programmierten Datenverkehr (im nicht-manipulierten Zustand des Datennetzes 11) beschreiben, ein Übereinstimmungskriterium 34 erfüllt. Ist das Übereinstimmungskriterium 34 nicht erfüllt, ergibt sich also eine Abweichung zwischen den Analysedaten 30' aus dem Auslesespeicher 30 und den Sendeplandaten 33, so kann durch den Mikroprozessor 29 eine Abwehrroutine 35 ausgelöst oder gestartet werden. Beispielsweise kann ein Funktionsumfang des Kraftfahrzeugs eingeschränkt werden und/oder ein Signal an einen Benutzer des Kraftfahrzeugs ausgesendet werden, um diesen zu informieren, dass das Kraftfahrzeug 10 in einer Werkstatt überprüft werden muss.

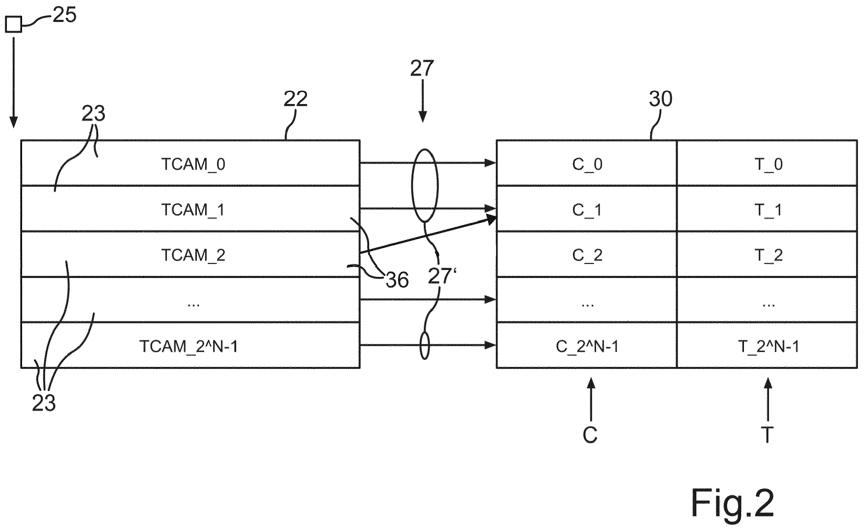

Fig. 2 veranschaulicht, wie in dem Assoziativspeicher 22 Datenmuster 23 als jeweilige Einträge TCAM_0 bis TCAM_2^N-1 vorgesehen sein können, wobei 2^N-1 bedeutet, dass eine Potenz von 2 die Anzahl der insgesamt vorgesehenen Einträge sein kann. Beispielsweise kann N eine ganze Zahl im Bereich von 0 bis 10 sein. Werden mittels des Assoziativspeichers 22 die Eingangsdaten 25 gefiltert, so kann es zu einer Übereinstimmung eines der Datenmuster 23 mit den Eingangsdaten 25 kommen, woraufhin als Treffersignal 27' die zugehörigen Trefferdaten 27 erzeugt werden. Jedem Datenmuster 23 kann einer der Zähler C zugeordnet werden, der durch die jeweiligen Trefferdaten 27' inkrementiert wird, sodass der Zählerstand oder Zählerwert C_0 bis C_2^N-1 inkrementiert wird. Beispielsweise kann in den Trefferdaten 27 angegeben sein, welcher Zähler C zugeordnet ist und daher inkrementiert werden muss.

Zusätzlich kann für das letzte empfangenen Datenpaket 18, welches das Treffersignal 27' zuletzt ausgelöst hat, der zugehörige Zeitstempel T des Empfangens oder des Treffersignals 27' als Zeitwert T_0 bis T_2^N-1 gespeichert werden. Fig. 2 zeigt, dass auch Datenmuster 23 zweier Einträge 36 durch denselben Zähler C als Zählerwert C_1 (beispielhaft) gewertet werden können. Hierdurch kann auch ein auf mehrere Datenmuster 23 verteilte Manipulation eines manipulierten Datenverkehrs im Datennetz 11 erkannt werden.

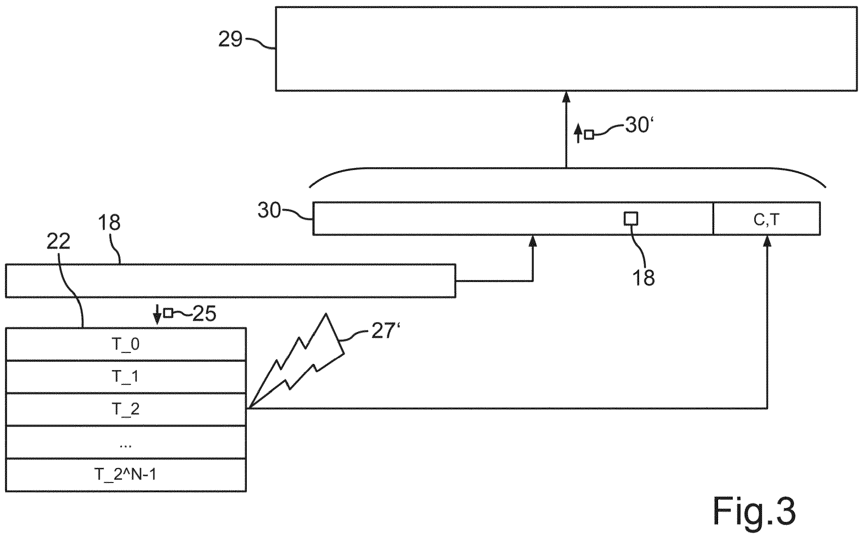

Fig. 3 veranschaulicht, wie in einem Auslesespeicher 30 lediglich zu dem zuletzt ausgelösten Treffersignal 27' aus dem Assoziativspeicher 22 das zugehörige Datenpaket 18 und der Zählerwert des Zählers C und ein Zeitstempel T abgespeichert werden können, die dann als Analysedaten 30' von dem Mikroprozessor 29 ausgelesen werden können. Hierdurch ist nur ein einzelner Auslesespeicher 30 für einen Eintrag von Analysedaten 30' notwendig, der Mikroprozessor 29 kann dann seriell bei jedem Treffersignal 27' den dann aktualisierten Inhalt der Analysedaten 30' auslesen.

Um den Datenverkehr zu analysieren kann es von Vorteil sein, über Zeitangaben und/oder eine statistische Auswertung zu verfügen, um eine Abweichung von einem Sendeschema der Steuergeräte des Kraftfahrzeugs 10 zu erkennen. Eine solche Abweichung ist ein Hinweis auf eine mögliche Manipulation oder Attacke betreffend das Kraftfahrzeug 10 und/oder dessen Datennetzes 11. Mit dem gezeigten Ansatz kann die Effizienz der Detektion gesteigert werden, indem in einem Assoziativspeicher 22 zusätzliche Datenmuster 23 zum Erzeugen von Treffersignalen 27' betreffend mögliche Abweichungen vom Sendeschema der Steuergeräte 12, 12 erkannt werden. Die Hauptidee besteht dabei darin, die vorhandenen Assoziativspeicher 22 einer Switchvorrichtung 15 zu erweitern, ohne hierbei den Assoziativspeicher 22 selbst neu konstruieren oder entwickeln zu müssen. Hierzu wird ein Assoziativspeicher, insbesondere ein TCAM-Filter mit zumindest einem Zähler und einem zugehörigen Register für Zeitstempel kombiniert. Dies bedeutet, dass eine TCAM-basierte Hardware nicht nur zum Detektieren oder Auswählen von Zielports verwendet wird, sondern die TCAM-basierte Hardware auch zum Erzeugen von statistischen Daten betreffend den Datenverkehr genutzt werden kann. Falls eine TCAM Filterregel einen Treffer erzeugt, also ein Datenmuster erkannt wird und das zugehörige Treffersignal erzeugt wird, kann der Zählerwert des zugeordneten Zählers inkrementiert werden und der Zeitstempel dieses Ereignisses im zugehörigen Register des Zeitstempels gespeichert werden. Das Tupel aus Zählerwert und Zeitstempel kann durch einen Mikroprozessor als Rechenknoten ausgelesen werden, wofür ein so genannter atomarer Zugriff (exklusiver Zugriff oder Zugriff innerhalb eines Taktzyklus des Computers) erfolgen. Als Erweiterung kann auch für die Filterregel vorgesehen sein, dass das Datenpaket selbst, also beispielsweise ein Ethernet-Frame, ebenfalls als Teil der Analysedaten, also zusammen mit dem Tupel aus Zählerwert und Zeitstempel, bereitgestellt oder an den Mikroprozessor übertragen wird. Es kann auch das Datenmuster 23, das zu Detektion geführt hat, und/oder die Angabe, welcher Zählerwert mit welchem Treffersignal assoziiert oder kombiniert ist, mit als Teil der Analysedaten bereitgestellt werden.

Durch die Möglichkeit, Datenmuster oder allgemein Filterregeln für einen TCAM festlegen oder steuern zu können, können die Datenmuster auch für ein spezielles Kraftfahrzeug optimiert oder angepasst festgelegt werden, sodass das für ein nichtmanipuliertes Datennetz 11 zu erwartende Sendeschema berücksichtigt werden kann. Indem über den Auslesespeicher das Datenpaket und der Zählerwert und der Zeitstempel an einen Mikroprozessor übertragen werden, kann die nachgelagerte Analyse oder Überprüfung auf eine mögliche Manipulation des Datennetzes erfolgen, ohne dass hierbei die Übertragungsgeschwindigkeit des Datennetzes eingehalten werden müsste, also das Datenpaket innerhalb einer vorbestimmten maximal zulässigen Latenzzeit wieder die Switchvorrichtung verlässt. Durch die Zeitstempel kann hierbei dennoch die Genauigkeit der Analyse beibehalten werden, da der Zeitpunkt des Vorgangs bekannt bleibt.

Die Zuordnung eines Datenmusters zu Ausgabedaten wird bei einem Assoziativspeicher auch als eine "Regel" bezeichnet. Stimmen Eingabedaten mit dem Datenmuster einer Regel überein, so "feuert" diese Regel, d.h. der Assoziativspeicher gibt die dem Datenmuster zugeordneten Ausgabedaten der Regel aus.

Beim Konfigurieren des Assoziativspeichers sollte darauf geachtet werden, dass die Datenmuster für die Zielportbestimmung (Auswahl zumindest eine Zielports) und die Datenmuster für das IDS (Ermittlung von Trefferdaten) unterschiedlich sind. Andernfalls kann es sein, dass beim Eingeben von dann durch der Assoziativspeicher aufgrund eines doppeldeutigen Datenmusters Zielportdaten ausgegeben werden anstelle von Aktionsdaten, die dann für das IDS nicht genutzt werden können.

Bei Datenmustern für die Zielportbestimmung einerseits und solchen für IDS wurden bisher allerdings solche Übereinstimmungen nicht beobachtet.

Möchte man gezielt dasselbe Datenmuster in zwei unterschiedlichen Regeln abspeichern, nämlich einmal für den Zweck der Zielportbestimmung und einmal für den Zweck des IDS, so können die Datenmuster in Bezug auf ihren jeweiligen Bestimmungszweck disambiguiert werden, indem das jeweilige ursprüngliche Datenmuster um einen disambiguierenden Zusatz ergänzt wird, z.B. ein zusätzliches Bit, um den Bestimmungszweck des Datenmusters zu kennzeichnen. So kann jedem Datenmuster für die Zielportbestimmung z.B. eine 0 und jedem Datenmuster für das IDS eine 1 vorangestellt oder angehängt werden. Allgemein können also alle Datenmuster, die für die Zielportbestimmung vorgesehen sind, entsprechend mit den Zusatz für die Zielportbestimmung ergänzt werden und alle Datenmuster für das IDS mit dem Zusatz für die Zielportbestimmung ergänzt werden. Entsprechend werden dann auch die Zielbestimmungsdaten und die Überwachungsdaten mit dem jeweiligen Zusatz ergänzt. Bei einem Look-up im Assoziativspeicher für die Zielportbestimmung sind also die Eingabedaten mit den entsprechenden Zusatz für Zielportbestimmung ausgestattet (z.B. führende 0), bei einem Look-up für das IDS sind die Eingabedaten mit den entsprechenden Zusatz für IDS ausgestattet (z.B. führende 1). Somit können nur die entsprechenden Datenmuster gefunden werden oder übereinstimmen.

Zusätzlich oder alternativ dazu können die Regeln (Datenmuster mit zugeordneten Ausgabedaten) in unterschiedlichen Speicherblöcken oder Bereichen des Assoziativspeichers gespeichert werden, nämlich einen Bereich für die Zielportbestimmung und einen Bereich für IDS. Solche Bereiche können z.B. geschaffen werden, indem der Assoziativspeicher durch mehrere Speicherbausteine gebildet wird und die Bereiche in jeweils anderen Speicherbausteinen angeordnet sind, sodass durch Adressieren oder Auswählen des jeweiligen zumindest einen Speicherbausteins gesteuert wird, dass die Regeln für die Zielportbestimmung oder die Regeln für das IDS für einen aktuellen Look-up ausgewählt sind. Es kann auch vorgesehen sein, dass für die Zielportbestimmung zumindest ein Speicherbaustein einer anderen Technologie verwendet wird (z.B. Hash-basiertes Assoziieren) als der zumindest eine Speicherbaustein für das IDS.

Anders herum können die im Assoziativspeicher gespeicherten Ausgabedaten der Regeln einen Zusatz aufweisen, der angibt, für welchen Bestimmungszweck (Zielportbestimmung oder IDS) sie vorgesehen sind, ob sie also einen Zielport angeben oder Signaldaten darstellen.

Zudem kann bei einem Assoziativspeicher bereits beim Konfigurieren desselben entweder darauf geachtet werden, dass keine doppeldeutigen Datenmuster abgespeichert werden, sodass nie zwei Regeln beim selben Datenmuster "feuern". Beispielsweise kann man beim Einspeichern eines Datenmusters einer neuen Regel ein Warnsignal oder Fehlersignal erzeugen, wenn bereits eine andere Regel mit demselben Datenmuster in dem Assoziativspeicher abgespeichert ist. Aber es kann auch anders herum vorteilhaft sein oder vorgesehen werden, dass Regeln mit Datenmustern abgespeichert werden, durch welche auch zwei oder mehr als zwei Regeln bei einem Datenpaket gemeinsam feuern können. Dies ist insbesondere dann sinnvoll, wenn diese Regeln demselben Anwendungszweck zugeordnet sind, insbesondere dem IDS. So können hierarchisch geordnete allgemeine und spezifische Regeln implementiert werden. Es ist dann eine Implementierungsfrage, wie reagiert wird, falls mehr als eine Regel durch ein Datenpaket erfüllt wird. Die Entscheidung, welcher Hit genutzt werden soll, kann der Fachmann je nach Anwendungsfall durch eine verarbeitende Logik vorbestimmen. Es kann auch eine sehr einfache Logik vorgesehen sein, z.B. immer die Regel mit der kleinsten oder größten Adresse zu verwenden, und bei der Konfiguration die Regeln im Assoziativspeicher hierarchisch geordnet abzuspeichern. Hierbei obliegt es dem User, die Konfiguration entsprechend aufzubereiten, sodass bei Mehrfachhits jeweils die strengere Regel weiterverarbeitet wird. Welche Regel "gefeuert" hat, kann z.B. einem vom Assoziativspeicher erzeugbaren Vektor aus Flags oder Werten entnommen werden, der signalisiert, wo Hits oder Regelerfüllungen erfolgt sind. Die Ausgabedaten des von der Logik ausgewählten Hits können dann verwendet werden. Ein Assoziativspeicher kann somit pro Eingabe mehrfach feuern und dabei obliegt es der Implementierung, welcher Hit weiterverarbeitet wird (z.B. jeweils der erste Eintrag eines Anwendungszweckes).

Die Idee lässt sich somit umsetzen, indem ein Satz von Zählern und Registern für Zeitstempel bereitgestellt wird, was einen geringen Zusatzaufwand in einer Switchvorrichtung darstellt. Falls eine TCAM-Filterregel ein Treffersignal auslöst, also ein Datenmuster 23 in den Eingangsdaten 25 erkannt wird, kann für den Fall, dass mehrere Datenmuster zutreffen, eine Priorisierung der Datenmuster dazu führen, dass lediglich ein Treffersignal 27' zur Erhöhung des jeweiligen Zählerwerts führt. In der beschriebenen Weise kann auch ein Zähler mehreren unterschiedlichen Filterregeln oder Treffersignalen 27' zugeordnet sein. Mit dem Mikroprozessor kann Datenanalyse-Software betrieben werden, wobei das Auslesen eines Tupels aus Zählerwert und Zeitstempel durch einen so genannten atomaren Zugriff (Zugriff innerhalb eines Taktzyklus) oder mittels eines Schattenpuffers erfolgen kann. Hierdurch kann ein versehentliches Abweichen der Zusammengehörigkeit von Zählerwert und Zeitstempel vermieden werden.

Die Abgleichroutine kann auf einer Methode des maschinellen Lernens, beispielsweise eines künstlichen neuronalen Netzwerks oder einer Deep-Learning-Methode beruhen, wodurch auch kompensiert werden kann, das Steuergeräte ihr Sendeschema situationsabhängig verändern können.

Insgesamt zeigen die Beispiele, wie durch einen TCAM und statische Zähler in einer Switchvorrichtung Informationen für ein IDS bereitgestellt werden können.

Die Erfindung bezieht sich somit zusammengefasst insbesondere auf folgende Aspekte:
1. Verfahren zum Überwachen eines Datenverkehrs zwischen Steuergeräten (12, 13) eines Kraftfahrzeugs (10), wobei die Steuergeräte (12, 13) über ein Datennetz (11) verbunden sind, das eine Switchvorrichtung (15) aufweist, in welcher physikalische Ports (16, 17) zum Empfangen und zum Aussenden von Datenpaketen (18) über eine Switchschaltung (20) verschaltet sind, und bei dem Verfahren einem jeweiligen Datenpaket (18), das über einen der Ports (16, 17) empfangen wird, durch einen Netzwerkprozessor (21) mittels eines Assoziativspeichers (22) Zielportdaten (26) zugeordnet werden und in Abhängigkeit von den Zielportdaten (26) zumindest einer der Ports (16, 17) als jeweiliger Zielport (19) ausgewählt wird und durch die Switchschaltung (20) das empfangene Datenpaket (18) an den zumindest einen Zielport (19) geleitet wird,
   dadurch gekennzeichnet, dass
   in dem Assoziativspeicher (22) zumindest ein vorbestimmtes Datenmuster (23) eines zu überwachenden und/oder zu detektierenden Pakettyps und/oder zu detektierenden Dateninhalts gespeichert wird, sodass durch den Assoziativspeicher (22) in Reaktion auf Eingangsdaten (25), falls die Eingangsdaten (25) das jeweilige Datenmuster (23) enthalten, ein zugeordnetes Treffersignal (27) erzeugt wird, und
   der Netzwerkprozessor (21) aus dem empfangenen Datenpaket (18) an vorbestimmten Überwachungspositionen des Datenpaktes (18) Detektionsdaten (31) ausliest und aus den Detektionsdaten (31) Eingangsdaten (25) für den Assoziativspeicher (22) bildet und durch Eingeben der Eingangsdaten (25) in den Assoziativspeicher (22) überprüft, ob sich ein Treffersignal (27) ergibt, und
   zumindest ein Zähler (C) bereitgestellt ist, in welchem durch einen jeweiligen Zählerwert angegeben wird, wie oft zu zumindest einem vorbestimmten Datenmuster (23) ein Treffersignal (27) erzeugt wurde,
   und der jeweilige Zählerwert und das jeweils letzte Datenpaket (18), durch welches der Zählerwert zuletzt erhöht wurde, als Analysedaten (30') in einem Auslesespeicher (30) bereitgestellt werden, und
   ein Mikroprozessor (29) über eine Datenschnittstelle die jeweils aktuellen Analysedaten (30') ausliest und anhand von Sendeplandaten (33), welche ein bestimmungsgemäßes Sendeschema der Steuergeräte (12, 13) beschreiben, mittels einer vorbestimmten Abgleichroutine (32) erkennt, dass die Analysedaten (30') von dem Sendeschema abweichen, und in diesem Fall eine vorbestimmte Abwehrroutine (35) auslöst.
2. Verfahren nach Aspekt 1, wobei für jeden des zumindest einen Zählers (C) zusätzlich zu dem Zählerwert auch ein Zeitstempel (T) der jeweils letzten Erhöhung des Zählerwerts gespeichert gehalten und als Teil der Analysedaten (30') in dem Auslesespeicher (30) bereitgestellt wird.
3. Verfahren nach einem der vorhergehenden Aspekte, wobei zumindest ein Zähler (C) die Treffersignale (27) für zumindest zwei Datenmuster zählt.
4. Verfahren nach einem der vorhergehenden Aspekte, wobei durch den Netzwerkprozessor (21) und/oder den Mikroprozessor (29) der jeweilige Zählerwert des zumindest einen Zählers (C) zurückgesetzt wird, falls eine vorbestimmte Rücksetzbedingung erfüllt ist.
5. Verfahren nach einem der vorhergehenden Aspekte, wobei mehrere Datensätze für unterschiedliche Überwachungspositionen bereitgestellt werden und
   durch den Netzwerkprozessor (21) anhand des Datenpakets (18) eine Paketcharakteristik der jeweiligen Datenpakets (18) ermittelt wird, und
   in Abhängigkeit von der Paketcharakteristik einer aus den Datensätzen ausgewählt wird und die Detektionsdaten (31) an den Überwachungspositionen, die durch den ausgewählten Datensatz (28) angegebenen sind, ausgelesen werden.
6. Verfahren nach Aspekt 5, wobei die Paketcharakteristik ein Protokolltyp und/oder einen Pakettyp und/oder einen Dateninhalt angibt.
7. Verfahren nach einem der vorhergehenden Aspekte, wobei die Überwachungspositionen disjunkte Datenfelder des Datenpakets (18) beschreiben.
8. Verfahren nach einem der vorhergehenden Aspekte, wobei das Bilden der Eingangsdaten (25) umfasst, dass die Detektionsdaten (31) mittels einer Shift-Operation umgeordnet werden und/oder mittels zumindest einer Kombinationsregel kombiniert werden.
9. Switchvorrichtung (15) für ein Datennetz (11) eines Kraftfahrzeugs (10), wobei die Switchvorrichtung (15) einen Netzwerkprozessor (21) und einen Assoziativspeicher (22) und einen Mikroprozessor (29) aufweist, die zusammen dazu eingerichtet sind, ein Verfahren nach einem der vorhergehenden Aspekte durchzuführen.
10. Kraftfahrzeug (10) mit einem Datennetz (11), bei welchem mehrere Netzwerkzweige über eine Switchvorrichtung (15) nach Aspekt 9 verschaltet sind.

## Patentansprüche

1. Verfahren zum Überwachen eines Datenverkehrs zwischen Steuergeräten (12, 13) eines Kraftfahrzeugs (10), wobei die Steuergeräte (12, 13) über ein Datennetz (11) verbunden sind, das eine Switchvorrichtung (15) aufweist, in welcher physikalische Ports (16, 17) zum Empfangen und zum Aussenden von Datenpaketen (18) über eine Switchschaltung (20) verschaltet sind, und bei dem Verfahren einem jeweiligen Datenpaket (18), das über einen der Ports (16, 17) empfangen wird, mittels eines Assoziativspeichers (22) Zielportdaten (26) zugeordnet werden und in Abhängigkeit von den Zielportdaten (26) zumindest einer der Ports (16, 17) als jeweiliger Zielport (19) ausgewählt wird und durch die Switchschaltung (20) das empfangene Datenpaket (18) an den zumindest einen Zielport (19) geleitet wird, wobei
in dem Assoziativspeicher (22) zumindest ein vorbestimmtes Datenmuster (23) eines zu überwachenden und/oder zu detektierenden Pakettyps und/oder zu detektierenden Dateninhalts gespeichert wird, sodass durch den Assoziativspeicher (22) in Reaktion auf Eingangsdaten (25), falls die Eingangsdaten (25) das jeweilige Datenmuster (23) enthalten, zugeordnete Trefferdaten (27) als Ausgabedaten erzeugt werden, und
der Netzwerkprozessor (21) aus dem empfangenen Datenpaket (18) an vorbestimmten Überwachungspositionen des Datenpaktes (18) Detektionsdaten (31) ausliest und aus den Detektionsdaten (31) Eingangsdaten (25) für den Assoziativspeicher (22) bildet und durch Eingeben der Eingangsdaten (25) in den Assoziativspeicher (22) überprüft, ob sich Trefferdaten (27) ergeben,
**dadurch gekennzeichnet, dass**
zumindest ein Zähler (C) bereitgestellt ist, in welchem durch einen jeweiligen Zählerwert angegeben wird, wie oft zu zumindest einem vorbestimmten Datenmuster (23) Trefferdaten (27) erzeugt wurden, und für jeden des zumindest einen Zählers (C) zusätzlich zu dem Zählerwert auch ein Zeitstempel (T) der jeweils letzten Erhöhung des Zählerwerts gespeichert gehalten wird und und der jeweilige Zählerwert und das jeweils letzte Datenpaket (18), durch welches der Zählerwert zuletzt erhöht wurde, und der Zeitstempel (T) als Analysedaten (30') in einem Auslesespeicher (30) bereitgestellt werden, und ein Mikroprozessor (29) über eine Datenschnittstelle die jeweils aktuellen Analysedaten (30') ausliest und anhand von Sendeplandaten (33), welche ein bestimmungsgemäßes Sendeschema der Steuergeräte (12, 13) beschreiben, mittels einer vorbestimmten Abgleichroutine (32) erkennt, dass die Analysedaten (30') von dem Sendeschema abweichen, und in diesem Fall eine vorbestimmte Abwehrroutine (35) auslöst.

2. Verfahren nach Anspruch 1, wobei zumindest ein Zähler (C) die Treffersignale (27) für zumindest zwei Datenmuster zählt.

3. Verfahren nach einem der vorhergehenden Ansprüche, wobei durch den Netzwerkprozessor (21) und/oder den Mikroprozessor (29) der jeweilige Zählerwert des zumindest einen Zählers (C) zurückgesetzt wird, falls eine vorbestimmte Rücksetzbedingung erfüllt ist.

4. Verfahren nach einem der vorhergehenden Ansprüche, wobei mehrere Datensätze für unterschiedliche Überwachungspositionen bereitgestellt werden und
durch den Netzwerkprozessor (21) anhand des Datenpakets (18) eine Paketcharakteristik der jeweiligen Datenpakets (18) ermittelt wird, und
in Abhängigkeit von der Paketcharakteristik einer aus den Datensätzen ausgewählt wird und die Detektionsdaten (31) an den Überwachungspositionen, die durch den ausgewählten Datensatz (28) angegebenen sind, ausgelesen werden.

5. Verfahren nach Anspruch 4, wobei die Paketcharakteristik ein Protokolltyp und/oder einen Pakettyp und/oder einen Dateninhalt angibt.

6. Verfahren nach einem der vorhergehenden Ansprüche, wobei die Überwachungspositionen unzusammenhängende Datenfelder des Datenpakets (18) beschreiben.

7. Verfahren nach einem der vorhergehenden Ansprüche, wobei das Bilden der Eingangsdaten (25) umfasst, dass die Detektionsdaten (31) mittels einer Shift-Operation umgeordnet werden und/oder mittels zumindest einer Kombinationsregel kombiniert werden.

8. Switchvorrichtung (15) für ein Datennetz (11) eines Kraftfahrzeugs (10), wobei die Switchvorrichtung (15) einen Netzwerkprozessor (21) und einen Assoziativspeicher (22) und einen Mikroprozessor (29) aufweist, die zusammen dazu eingerichtet sind, ein Verfahren nach einem der vorhergehenden Ansprüche durchzuführen.

9. Kraftfahrzeug (10) mit einem Datennetz (11), bei welchem mehrere Netzwerkzweige über eine Switchvorrichtung (15) nach Anspruch 8 verschaltet sind.
